# EUROPÄISCHE PATENTANMELDUNG

(11) **EP 1 077 233 A2**
(43) Veröffentlichungstag der Anmeldung: **21.02.2001**
(21) Anmeldenummer: 00113041.8
(22) Anmeldetag: 23.06.2000
(51) Int. Cl.: C08L 83/06, C08L 83/12, C09D 183/06, C09D 183/12

(54) **Trennmittel gegen bituminöse Stoffe**

(30) Priorität: 19.08.1999 DE 19939257; 10.09.1999 DE 19947442
(71) Anmelder: Wacker-Chemie GmbH, 81737 München (DE)
(72) Erfinder: Mahr, Günther, Dr., 84489 Burghausen (DE); Okabe, Tadahiro, Tsukuba-gun, Ibaraki Pref. 300-2332 (JP); Ito, Kengo, Kashiwa-shi, Chiba Pref. 277-0005 (JP)
(74) Vertreter: Fritz, Helmut, Dr.

(57) **Zusammenfassung**

Die Erfindung betrifft eine Zusammensetzung, die zumindest ein Polyorganosiloxan in Wasser gelöst oder dispergiert enthält, ohne daß zusätzliche Dispergiermittel enthalten sind.

## Beschreibung

Die Erfindung betrifft Zusammensetzungen, ein Schichtsystem, das diese Zusammensetzungen enthält und ein Verfahren zur Herstellung einer Schicht.

Bitumina, wie zum Beispiel Straßenbaubitumina und Industriebitumina, bitumenhaltige Bindemittel, wie zum Beispiel Bitumenlösungen, Bitumenemulsionen und polymermodifizierte Bitumina, Asphalte, wie zum Beispiel Naturasphalte und technische Asphalte, Bitumenbahnen, Steinkohlenteerpeche, Steinkohlenteer-Spezialpeche und Zubereitungen aus Steinkohlenteer-Spezialpechen, wie zum Beispiel Straßenpeche, Steinkohlenteer-Bindepeche, Steinkohlenteer-Imprägnierpeche, präparierte Peche, Pechsuspensionen und Steinkohlenteer-Spezialpeche mit Mineralstoffen, finden breite Anwendung in Asphalt-, Grundier-, Isolier- und Lederbeschichtungen zur Verwendung in der Bau-, Elektro-, Farben- und Lackindustrie. Da Bitumina, bitumenhaltige Bindemittel und Asphalte bei gewöhnlicher Temperatur ziemlich fest sind und von Wasser nicht beeinflußt werden, dienen sie in großem Umfang zum "Asphaltieren" von Verkehrsflächen, wie z.B. Straßen, Plätzen und Wegen (im Gemenge mit einer Vielzahl anderer Materialien) und Dächern sowie zur Herstellung von Dachpappen.

Dieselben Eigenschaften, die Bitumina, bitumenhaltigen Bindemitteln und Asphalten ihr gewünschtes Eigenschaftsprofil verleihen, wie zum Beispiel Zähigkeit und hervorragende Adhäsion an sehr viele, unterschiedliche Stoffe, rufen bei ihrer Anwendung signifikante Probleme hinsichtlich ihrer Trennung von mit ihnen in Kontakt kommenden Oberflächen hervor, wie zum Beispiel Lastwagen-Ladeflächen und anderen Transport-Behältern, Asphaltiermaschinen, Straßenwalzen, Schaufeln, Rechen und anderen Werkzeugen.

Diese Probleme haben sich verschärft durch die Verwendung neuartiger Asphalt-Zusammensetzungen, die mit organischen Polymeren, wie zum Beispiel synthetischen oder natürlichen Kautschuken oder thermoplastischen Elastomeren oder thermoplastischen Harzen, modifiziert sind, weil diese neuartigen Asphalt-Zusammensetzungen eine erhöhte Adhäsion auf unterschiedlichsten Oberflächen aufweisen.

Erdölprodukte, wie zum Beispiel Diesel-Kraftstoff, wurden und werden bei Lastwagen-Ladeflächen und anderen Transport-Behältern, Asphaltiermaschinen, Straßenwalzen, Schaufeln, Rechen und anderen Werkzeugen verwendet, um die Trennung von Bitumina, bitumenhaltigen Bindemitteln, Asphalten, Steinkohlenteer-Spezialpechen und Zubereitungen aus Steinkohlenteer-Spezialpechen von deren Oberflächen zu erleichtern. Diesel-Kraftstoffe werden in dieser Anwendung jedoch als umweltfeindlich angesehen. Hinzu kommt, daß der Trenneffekt von Diesel-Kraftstoffen mit der Zeit nachläßt, das heißt bei längeren Fahrten vom Asphalt-Hersteller zum Asphalt-Projekt, oder besonders für die oben beschriebenen, neuartigen Asphalt-Zusammensetzungen, wie zum Beispiel Flüsterasphalte, wasser-permeable Asphalte, abriebfeste Asphalte, kolorierte Asphalte und hochviskose Asphalte, nicht ausreichend ist. Diesel-Kraftstoff kann zudem in Asphalt-Zusammensetzungen inkorporiert werden und dort zur Bildung von lokalen Erweichungen und farblichen Veränderungen der Asphaltzusammensetzung führen, besonders durch nachfolgende Migration an die Oberfläche asphaltierter Flächen unter dem Einfluß von Wärme und Licht. Dies ist allgemein für Asphalt-Zusammensetzungen und im besonderen Maße für kolorierte Asphalte nicht erwünscht. Diesel-Kraftstoffe können aus diesen Gründen nicht länger als Asphalt-Trennmittel empfohlen werden.

US Patent 4,078,104 beschreibt Asphalt-Trennbeschichtungen aus Polydialkysiloxanen, wie zum Beispiel Polydimethylsiloxanen, die zusätzlich 0.1 bis 90.0 Gew.-% aminofunktionelle Silane oder Siloxane enthalten. Die Zusammensetzungen können pur mit speziellen Sprühvorrichtungen oder gelöst in organischen Lösungsmitteln, wie zum Beispiel Naphtha aufgetragen werden. Diese Zusammensetzungen weisen eine Trennwirkung auf, sind jedoch teuer. Der Auftrag der puren Zusammensetzung erfordert spezielle Sprühvorrichtungen, wohingegen der Auftrag aus Lösung aus ökologischer Sicht nicht mehr akzeptabel ist.

US Patent 5,494,502 beschreibt die Anwendung von Emulsionen von tierischen oder pflanzlichen Fettölen, wie zum Beispiel Sojabohnenöl, Leinsamenöl, Tungöl und Olivenöl, zusammen mit einem Tensid, mit welchem das Öl in Wasser dispergiert werden kann. Die bevorzugte Anwendung erfolgt durch Aufschäumen des Trennmittels mit einem speziellen Schaumapparat, der die Leichtigkeit der Anwendung deutlich einschränkt. Zusätzlich sind die Trenneigenschaften deutlich limitiert. Sobald das Wasser aus der Formulierung verdampft ist, erweichen die Fettöle den Asphalt und sorgen dafür, daß der Asphalt stärker an Oberflächen, wie zum Beispiel Lastwagen-Ladeflächen, klebt. Zudem sind Emulsionen metastabile Systeme, die vor allem bei hoher Verdünnung instabil werden und zu Aufrahmung und Separation neigen können, was der Anwendung hinderlich ist.

Aufgabe der Erfindung ist es, den Stand der Technik zu verbessern und insbesondere ein preisgünstiges, umweltverträgliches Trennmittel gegen bituminöse Stoffe und Peche zur Verfügung zu stellen, das ohne Verwendung von organischen Lösemitteln und ohne Spezialgeräte anwendbar ist, das stabil ist und das hervorragende (Mehrfach-) Trenneigenschaften gegenüber heißen Bitumina, bitumenhaltigen Bindemitteln, Asphalten, Bitumenbahnen, Steinkohlenteerpechen, Steinkohlenteer-Spezialpechen und Zubereitungen aus Steinkohlenteer-Spezialpechen und besonders den oben beschriebenen, neuartigen Asphalten aufweist.

Die Aufgabe wird durch die nachstehend beschriebene Erfindung erreicht. Es wurde überraschenderweise gefunden, daß Trennmittel gegen bituminöse Stoffe und Peche auf Basis von Organopolysiloxanen hergestellt und in Form ihrer wässerigen Lösungen bereitgestellt werden können, die die oben beschriebenen Anforderungen erfüllen.

Gegenstand der Erfindung ist eine Zusammensetzung, die zumindest ein Organopolysiloxan in Wasser gelöst oder dispergiert enthält, ohne daß zusätzliche Dispergiermittel enthalten sind.

Das Organopolysiloxan kann ein einzelnes Organopolysiloxan oder ein Gemisch unterschiedlicher Organopolysiloxane sein. Die Organopolysiloxane können funktionelle Gruppen tragen, in dem Maße wie stabile wäßrige Lösungen, Suspensionen oder Dispersionen erhalten werden können. Die Organopolysiloxane können linear sein, verzweigt sein oder harzartig sein und werden aus Einheiten der Formeln R₃SiO_{1/2} (M-Einheiten), R₂SiO_{2/2} (D-Einheiten), RSiO_{3/2} (T-Einheiten) und SiO_{4/2} (Q-Einheiten) gebildet. Organopolysiloxane, die T- und Q-Einheiten beinhalten sind verzweigt. Organopolysiloxane, die große Anteile an T- und Q-Einheiten aufweisen sind Organopolysiloxan-Harze.

In den oben aufgeführten Formeln kann R bedeuten:
C₁-C₆₀ Kohlenwasserstoff-Rest, gesättigt oder ungesättigt, unsubstituiert oder substituiert.

Beispiele für Reste R sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der ß-Phenylethylrest. Bevorzugt sind C₁-C₁₈-Kohlenwasserstoff-Reste. Besonders bevorzugt ist der Methyl-Rest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino-(2-methyl)propylrest; Aminoarylreste, wie der Aminophenylrest; Acyloxyalkylreste, wie der 3-Acryloxypropyl- und 3-Methacryloxypropylrest; Hydroxyalkylreste, Acetoxyalkylreste, wie der 3-Acetoxypropylrest; Diethylphosphonsäureesterreste, wie der Diethylphosphonsäureesterethylrest; und Bernsteinsäureanhydridalkylreste, wie der 3-Bernsteinsäureanhydridpropylrest.

Alle substituierten Kohlenwasserstoff-Reste, die die Stabilität der Lösung, der Suspension oder der Dispersion sowie die Trenneigenschaften der Asphalt-Trennmittel-Zusammensetzung nicht negativ beeinflussen, können verwendet werden. Der C₁-C₆₀ Kohlenwasserstoff-Rest, gesättigt oder ungesättigt, unsubstituiert oder substituiert, kann auch Hetero-Atome enthalten, einen einwertigen, gegebenenfalls mit Fluor-, Chlor-, Brom-, C₁-C₄-Alkoxyalkyl- oder Cyanogruppen substituierten C₃- bis C₃₀-Kohlenwasserstoffrest, der durch beidseitig an Kohlenstoffatome gebundene Reste aus der Gruppe -O-, -COO-, -OOC-, -CONR-, -NRCO- und -CO- unterbrochen sein kann. Bevorzugt sind die Hetero-Atome -O-, -S- und -NH-. Weitere bevorzugte Reste sind C₆-C₃₀ Aryl-, Alkaryl- oder Aralkyl-Rest. Diese Reste können auch substituiert sein. Beispiele für derartige Reste sind z.B. der Phenyl- und der Naphthyl-rest.

Die Organopolysiloxane können auch vorzugsweise Hydroxyl-Reste, Wasserstoff-Rest, C₁-C₈ Alkoxy-Reste, Aminoalkyl-Reste, Polyoxyalkylen-Reste, Polyzucker-Reste aufweisen. Bevorzugte Alkoxy-Reste sind C₁-C₄-Alkoxy-Reste. Besonders bevorzugt sind der Methoxy- und der Ethoxy-Rest. Bevorzugte Polyoxyalkylen-Reste sind Reste, die Oxyethylen-, Oxypropylen- und Oxybutylen-Gruppen enthalten. Besonders bevorzugte Polyoxyalkylen-Reste sind Reste, die Oxyethylen- und Oxypropylen-Gruppen enthalten. Geeignete Polyoxyalkylen-Reste sind dem Fachmann bekannt. Alle Polyoxyalkylen-Reste, die die Stabilität der Lösung, der Suspension oder der Dispersion sowie die Trenneigenschaften des Asphalttrennmittels nicht negativ beeinflussen, können verwendet werden. Der bevorzugte Polyzucker-Rest ist der Polyglucosid-Rest.

Die Organopolysiloxane können auch Alkylen-Gruppen oder einzelne, oligomere und polymere Polyoxyalkylen-Gruppen in der Organopolysiloxan-Kette aufweisen, in der Weise, daß die Organopolysiloxane Si-R¹-Si-Gruppen aufweisen, wobei R¹ C₁-C₁₈ Alkylen-Rest oder Polyoxyalkylen-Rest der Formeln -O-(R²-O)ₙ-oder -(R²-O)ₙ- ist, wobei R² ein C₁-C₁₈ Alkylen-Rest, bevorzugt C₂-C₄ Alkylen-Rest und besonders bevorzugt der Ethylen- oder Propylen-Rest ist und n eine ganze Zahl von 1 bis 100 bedeutet. Beispiele für R² sind Alkylenreste wie Methylen-, Ethylen-, Propylen-, Butylen-, Pentylenrest, Hexylen-, Heptylen-, Oktylen-, Nonylen-, Decylen-, Undecylen-, Dodecylen-, Hexadecylen und Oktadecylenrest.

Bevorzugte Organopolysiloxane, die als Organopolysiloxan-Komponente verwendet werden, sind Hydroxy-funktionelle, Alkoxy-funktionelle, Polyoxyalkylen-funktionelle und Polyglycosid-funktionelle Organopolysiloxane, deren nicht-funktionelle Gruppen bevorzugt Methylgruppen sind. Besonders bevorzugte Organopolysiloxane sind Polyoxyalkylen-funktionelle Organopolysiloxane der Formel

YR³₂SiO-[SiR³₂O-]a[SiR³ZO-]_{b}SIR³₂Y

wobei
Y = Rest R³ oder Rest Z,
R³ = Alkylrest mit 1 bis 60 Kohleristoffatomen, substituierter Alkylrest, gegebenenfalls substituierter Arylrest oder gegebenenfalls substituierter Alkarylrest, wobei jedoch mindestens 80 % der Reste R³ Methylgruppen sind, Beispiele für
R³ sind die entsprechenden Reste, die unter R beschrieben sind,
Z = Rest der Formel

   -R⁴_{c}-O-(C_{d}H_{2d-e}R⁵ₑO-)ₘR⁶

   wobei
R⁴ ein zweiwertiger Alkylenrest ist, der auch verzweigt sein kann, und Beispiele unter R² beschrieben sind,
c einen Wert von 0 oder 1 hat,
d einen Wert von 2 bis 4 hat,
e einen Wert von 0 bis 3 hat,
m einen Wert von 1 bis 100 hat und der von der Klammer mit dem Index m umgebene Ausdruck gleich oder verschieden sein kann und blockweise oder statistisch verteilt angeordnet sein kann,
R⁵ ein einwertiger, gegebenenfalls auch verzweigte oder Ethergruppen, wie Oxyethylen-, Oxypropylen- und Oxybutylen-Gruppen, enthaltender organischer Rest und
R⁶ ein Wasserstoffrest, ein gegebenenfalls substituierter Alkylrest mit 1 bis 6 Kohlenstoffatomen, ein Acylrest oder ein -O-CO-NH-R⁷-Rest ist, bei dem R⁷ ein gegebenenfalls substituierter Alkyl- oder Arylrest ist, Beispiele für R⁵ und
R⁷ sind die entsprechenden Reste, die unter R beschrieben sind
   wobei
   mindestens ein Rest Z pro durchschnittlichem Molekül gegebenenfalls auch in Form des Restes Y enthalten sein muß,
a einen Wert von 0 bis 500 und
b einen Wert von 0 bis 100 hat,
   und des weiteren sind Polyglycosid-funktionelle Organopolysiloxane bevorzugt, deren Struktur und Darstellung in der Patentschrift EP 0612759 beschrieben ist.

Beispiele für Polyglycosid-funktionelle Organopolysiloxane sind Glycosidreste aufweisende Organosiliciumverbindungen aus Einheiten der Formel

R⁸_{f}R⁹_{g}SiO_{(4-f-g)/2} (I),

worin
R⁸ gleich oder verschieden sein kann und einen Rest der Formel

   W-(R¹⁰O)ₕ-R¹¹- (II)

   bedeutet, worin
W einen Glycosidrest bedeutet, der aus vorzugsweise bis 10, bevorzugt 1 bis 4, besonders bevorzugt 1 bis 2, Monosaccharideinheiten aufgebaut ist,
R¹⁰ gleich oder verschieden sein kann und Alkylenrest bedeutet,
h 0 oder eine Zahl von 1 bis 20, bevorzugt 0 oder eine Zahl von 1 bis 15, besonders bevorzugt 0 oder eine Zahl von 1 bis 4, ist und
R¹¹ Alkylenrest bedeutet,
   mit der Maßgabe, daß die Summe aus f und g kleiner oder gleich 3 ist und Organosiliciumverbindung aus Einheiten der Formel (I) pro Molekül mindestens einen Rest R⁹ enthält.

Bevorzugt handelt es sich bei Rest R⁸ um gegebenenfalls substituierte Kohlenwasserstoffreste mit 1 bis 18 Kohlenstoffatomen, wobei Alkylreste mit 1 bis 4 Kohlenstoffatomen, insbesondere der Methylrest, besonders bevorzugt sind.

Beispiele für Reste R⁸ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert. -Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der ß-Phenylethylrest.

Beispiele für Monosaccharide, aus denen die Glycosidreste W aufgebaut sein können, sind Hexosen und Pentosen, wie Glucose, Fructose, Galactose, Mannose, Talose, Allose, Altrose, Idose, Arabinose, Xylose, Lyxose und Ribose, wobei Glucose besonders bevorzugt ist.

Beispiele für Alkylenreste sind Methylen-, Ethylen-, Propylen-, Butylen-, Pentylen-, Hexylen-, Heptylen-, Octylen-, Nonylen-, Decylen- und Octadecylenreste.

Bevorzugt handelt es sich bei Rest R¹⁰ um den Ethylenrest und den 1,2-Propylenrest, wobei der Ethylenrest besonders bevorzugt ist.

Bevorzugt handelt es sich bei Rest R¹¹ um lineare Alkylenreste mit 2 bis 20 Kohlenstoffatomen, besonders bevorzugt um lineare Alkylenreste mit 2 bis 8 Kohlenstoffatomen, insbesondere um den n-Propylenrest.

Beispiele für Reste R⁹ sind G-CH₂CH₂CH₂-,
G-[CH₂CH₂O]-CH₂CH₂CH₂-,
G-[CH₂CH₂O]₂CH₂CH₂CH₂-,
G-[CH₂CH(CH₃)O]-CH₂CH₂CH₂-,
G-[CH₂CH(CH₃)O]₂CH₂CH₂CH₂-,
G-[CH₂CH₂O]-CH₂CH(CH₃)CH₂-,
G-[CH₂CH₂O]₂-CH₂CH(CH₃)CH₂-,
   wobei G einen Glucosidrest (C₆H₁₁O₆-) bedeutet,
G₂-CH₂CH₂CH₂-,
G₂-[CH₂CH₂O]-CH₂CH₂CH₂-,
G₂-[CH₂CH₂O]₂-CH₂CH₂CH₂-,
G₂-[CH₂CH(CH₃)O]-CH₂CH₂CH₂-,
G₂-[CH₂CH(CH₃)O]₂-CH₂CH₂CH₂-,
G₂-(CH₂CH₂O)-CH₂CH(CH₃)CH₂- und
G₂-(CH₂CH₂O)₂-CH₂CH(CH₃)CH₂-,
   wobei G₂ einen aus zwei Glucoseeinheiten aufgebauten Glycosidrest bedeutet.

Bevorzugt handelt es sich bei Rest R⁹ um G-CH₂CH₂CH₂-, G-[CH₂CH₂O]-CH₂CH₂CH₂-, G₂-CH₂CH₂CH₂ - und G₂-[CH₂CH₂O]]-CH₂CH₂CH₂-, wobei G-[CH₂CH₂O]-CH₂CH₂CH₂-, und G₂-[CH₂CH₂O]-CH₂CH₂CH₂- besonders bevorzugt sind und G einen Glucosidrest (C₆H₁₁O₆-) und G₂ einen aus zwei Glucoseeinheiten aufgebauten Glycosidrest bedeutet.

Bevorzugt handelt es sich bei den erfindungsgemäßen, Glycosidresten aufweisenden Organosiliciumverbindungen um solche der Formel

R⁹ₓR⁸₃₋ₓSiO-[(SiR⁸R⁹O)ᵢ-(SiR⁸₂O)ₙ]_{y}-SiR⁸₃₋ₓR⁹ₓ (III),

worin R⁸ und R⁹ die obengenannte Bedeutung haben,
i gleich oder verschieden sein kann und 0 oder eine Zahl von 1 bis 200, bevorzugt 0 oder eine Zahl von 1 bis 100, besonders bevorzugt 0 oder eine Zahl von 1 bis 50, ist,
n gleich oder verschieden sein kann und 0 oder eine Zahl von 1 bis 1000, bevorzugt 0 oder eine Zahl von 1 bis 500, besonders bevorzugt 0 oder eine Zahl von 1 bis 100, ist,
x 0 oder 1 ist und
y 0 oder eine Zahl von 1 bis 1200, bevorzugt 0 oder eine Zahl von 1 bis 600, besonders bevorzugt 0 oder eine Zahl von 1 bis 100, ist,
   mit der Maßgabe, daß die Verbindung der Formel (III) mindestens einen Rest R⁹ aufweist.

Ist in den Glycosidresten aufweisenden Organosiliciumverbindungen gemäß Formel (III) i durchschnittlich verschieden 0, bedeutet x bevorzugt 0.

Ist in den Glycosidresten aufweisenden Organosiliciumverbindungen gemäß Formel (III) x durchschnittlich verschieden 0, ist i bevorzugt 0.

Obwohl durch Formel (III) nicht dargestellt, können bis zu 10 Molprozent der Diorganosiloxaneinheiten durch andere Siloxaneinheiten, wie beispielsweise R⁸SiO_{3/2}-, R⁹SiO_{3/2}-und/oder SiO_{4/2}-Einheiten, ersetzt sein, wobei R⁸ und R⁹ die oben dafür angegebene Bedeutung haben.

Die erfindungsgemäßen, Glycosidreste aufweisenden Organosiliciumverbindungen können nach verschiedenen Verfahren hergestellt werden, die zum Beispiel in EP-A- 0 612 759 beschrieben sind.

Polyoxyalkylen-funktionelle Organopolysiloxane sind dem Fachmann bekannt und können durch Übergangsmetall-katalysierte Addition von Si-H-Bindungen an Alkenylgruppen-haltige Polyether oder durch Säure-katalysierte Umsetzung von hydroxylgruppenhaltigen Polyethern mit Siloxanen, die SiOH-, SiOR-, SiH- oder SiN-Gruppierungen enthalten, dargestellt werden (W. Noll, Chemie und Technologie der Silicone, 2. neubearbeitete und wesentlich erweiterte Auflage, Verlag Chemie GmbH, Weinheim, 1968).

Bevorzugte Zusammensetzungen sind Zusammensetzungen, die Polyoxyalkylen-funktionelle oder Polyglucosid-funktionelle Organopolysiloxane oder deren Mischungen enthalten. Besonders bevorzugte Asphalttrennmittel sind Zusammensetzungen, die Polyoxyalkylen-funktionelle Organopolysiloxane enthalten. Derartige Zusammensetzungen sind deshalb besonders bevorzugt, weil sie die wirtschaftlichste Formulierung, den besten (Mehrfach)-Trenneffekt und die gleichförmigsten sowie universellsten Trenneigenschaften über ein breites Gebiet unterschiedlicher Anwendungen bereitstellen.

Die Organopolysiloxane müssen wasserlöslich oder stabil suspendierbar oder dispergierbar sein. Bevorzugt sind Organopolysiloxane, die wasserlöslich sind oder selbstsuspendierend oder selbstdispergierend. Besonders bevorzugt sind Organopolysiloxane, die wasserlöslich sind. Obwohl wasserlösliche oder selbstsuspendierende oder selbstdispergierende Organopolysiloxane zur Herstellung der erfindungsgernäßen Asphalttrennmittel bevorzugt sind, können bei Herstellung der erfindungsgemäßen Asphalttrennmittel auch Emulgatoren oder Dispergierhilfen oder Suspendierhilfen verwendet werden, was aber nicht bevorzugt ist. Geeignete Emulgatoren sind dem Fachmann bekannt.

Die Organopolysiloxane besitzen eine Viskosität bei 25 °C von 10 mm²s⁻¹ bis 100000 mPas, bevorzugt 10 mm²s⁻¹ bis 50000 mPas und besonders bevorzugt von 10 mm²s⁻¹ bis 10000 mPas.

Die erfindungsgemäßen Zusammensetzungen enthalten 0,001 Gew.-% bis 99,999 Gew.-% an Organopolysiloxan-Komponente, bevorzugt 0,05 Gew.-% bis 70 Gew.-%, und besonders bevorzugt 0,05 Gew.-% bis 35 Gew.-%. Die tatsächliche Menge an Organopolysiloxan-Komponente ist abhängig von der Natur der Organopolysiloxane, von der zu behandelnden Oberfläche, von der Klebrigkeit des zu trennenden Stoffes und von der Zahl der Trennvorgänge, die erreicht werden sollen.

Eine bevorzugte Zusammensetzung ist eine erfindungsgemäße Zusammensetzung, wobei zumindest das Polyorganosiloxan oder zumindest das Polyethersiloxan oder zumindest das Polyglykosidsiloxan in Wasser in einem Gewichtsverhältnis von vorzugsweise 1:0,001 bis 1:100000, besonders bevorzugt 1:0,43 bis 1:5000, ganz besonders bevorzugt 1:1,86 bis 1:5000 enthalten ist.

Zusätzlich zur erforderlichen Organopolysiloxan-Komponente und Wasser können die erfindungsgemäßen Zusammensetzungen synthetische oder organische Öle, Harze und Wachse in Form ihrer wässerigen Dispersionen, soweit nicht wasserlöslich, Bakterizide, Korrosionsinhibitoren, Lösungsvermittler, Antischaummittel, Biocide, Fungicide, Haftmittel, Oberflächenbehandlungsmittel, Spreit- und Benetzungsmittel, Frostschutzmittel und Polyether oder Emulgatoren oder Dispergier- und Suspendierhilfen enthalten, wobei Lösungsvermittler oder Emulgatoren oder Dispergier- und Suspendierhilfen nicht bevorzugt sind, wobei jeder dieser Hilfsstoffe in Mengen von 0 Gew.-% bis 5 Gew.-%, bevorzugt 0 Gew.-% bis 3 Gew.-%, besonders bevorzugt 0 Gew.-% bis 2 Gew.-% enthalten sein kann. Es gehört eine Vielzahl strukturell sehr unterschiedlicher Polymeren zu den Polyethern, z.B. die Polyalkylenglykole (Polyethylenglykole, Polypropylenglykole u. Polyepichlorhydrine) als Polymere von 1,2-Epoxiden, Epoxidharze, Polytetrahydrofurane (Polytetramethylenglykole), Polyoxetane, Polyarylether (Polyphenylenether), Alkylpolyglycoside oder Polyetherketone, wie Polyetheretherketone.

Des weiteren finden chlorierte Polyether, Polysulfone (Polyether-Sulfone) und Polyether-Polyimide sowie funktionalisierte Polyether, d.h. Verbindungen mit einem Polyether-Gerüst, die noch andere funktionelle Gruppen tragen wie z.B. Carboxy-, Epoxy-, Allyl- oder Amino-Gruppen usw. Verwendung. Vielseitig verwendbar sind Block-Copolymere von Polyethern u. Polyamiden (sogenannte Polyetheramide oder Polyether-Blockamide, Abkkürzung PEBA), wobei Polyether vorzugsweise in Mengen von 0 bis 20 Gew.%, bevorzugt von 0 bis 10 Gew.% und besonders bevorzugt von 0 bis 5 Gew.% enthalten sein können.

Anders als in den Zusammensetzungen des vorher beschriebenen Stands der Technik, die Fettöle als notwendigen Bestandteil mit all dessen Nachteilen, die vorher beschrieben wurden, beinhalten, können die erfindungsgemäßen Zusammensetzungen geringe Anteile an relativ preiswerten tierischen und pflanzlichen Ölen enthalten. Diese kleinen Mengen von maximal 20 Gew.-%, bevorzugt maximal 10 Gew.-% und besonders bevorzugt von maximal 5 Gew.-% haben gemäß ihrer kleinen Menge nicht die Nachteile von Trennmittel-Zusammensetzungen, die alleine auf derartigen Ölen basieren.

Die erfindungsgemäßen Zusammensetzungen sind vorteilhaft beim Verarbeiten von Asphalten, die insbesondere Zuschlagsstoffe, wie zum Beispiel Fels, Steine, Schotter, Mineralstoffe und Sand enthalten, die mit diesen vermengt und als Asphalt-Gemenge heiß oder kalt verlegt werden. Die Asphalte können auch mit Polymeren, wie zum Beispiel synthetischen oder natürlichen Kautschuken, wie zum Beispiel Styrol-Butadien-Kautschuken (SBR), Chloropren-Kautschuken (CR) und Nitril-Butadien-Kautschuken (NBR), oder thermoplästischen Elastomeren, wie zum Beispiel Styrol-Butadien-Styrol-Copolymeren (SBS) und Styrol-Isopren-Styrol-Copolymeren (SIS), oder thermoplastischen Harzen, wie zum Beispiel Ethylen-Vinylacetat-Copolymeren (EVA), Ethylen-Acrylsäureester-Copolymeren (EEA) und Epoxyharzen modifiziert sein.

Die Zusammensetzungen können in der Konstruktion von harten Oberflächen, wie zum Beispiel bei Gehsteigen, Straßen, Parkplätzen, Fahrradwegen, Rolifeldern, Dächern und Ähnlichem eingesetzt werden.

Die erfindungsgemäßen Zusammensetzungen können angewendet werden als Film auf Oberflächen aus Papier, Kunststoffen, (lackierten) Metallen oder anderen Substraten, von denen erwartet wird, daß sie mit den Asphalt-Zusammensetzungen in Kontakt kommen. Die erfindungsgemäßen Zusammensetzungen können angewendet werden mit jeder bekannten, konventionellen Methode, wie zum Beispiel durch Aufpinseln, Sprühen, Aufbringen mit einem Gewebe oder Tauchen, mit bekannten, herkömmlichen Geräten, die manuell oder automatisch arbeiten. Die Verwendung von Spezialgeräten ist nicht erforderlich. Spezialgeräte können eingesetzt werden, was jedoch nicht bevorzugt ist.

Die Zusammensetzungen können in Form ihrer anwendungsfertigen wässerigen Lösungen oder Dispersionen, die zur Behandlung der in Frage kommenden Oberflächen ohne weitere Verdünnung eingesetzt werden können, ihrer verdünnbaren wässerigen Lösungen oder Dispersionen oder als Konzentrat bereitgestellt werden.

Der pH-Wert der erfindungsgemäßen Zusammensetzungen beträgt 4 bis 10, bevorzugt zwischen 7 und 9, wenn diese Zusammensetzungen auf Eisen- oder Stahl-Substraten aufgetragen werden. Der pH-Wert kann gegebenenfalls durch Zugabe milder organischer Basen, wie zum Beispiel Diethanolamin und Triethanolamin, eingestellt werden. Anorganische Basen wie zum Beispiel Alkalimetallhydroxide oder Ammoniak können auch verwendet werden.

Ein weiterer Gegenstand der Erfindung ist ein Schichtsystem aus zumindest drei Schichten, wobei die erste Schicht ein Substrat ist und die zweite Schicht eine erfindungsgemäße Zusammensetzung enthält und die dritte Schicht zumindest ein Bitumen-haltiger Stoff oder Stoffgemisch oder einen Steinkohlenteerpech-haltigen Stoff oder Stoffgemisch enthält.

Bei dem Substrat handelt es sich vorzugsweise um Papier, Kunststoff, Metallgegenstände, wie Ladeflächen von LKWs, Transportbehälter, Rechen, Schaufeln, Geräte und Maschinen zum Asphaltieren, oder Straßenwalzen.

Ein bevorzugtes Schichtsystem ist eines, mit der Maßgabe, daß die dritte Schicht unmittelbar auf die zweite Schicht folgt. Zwischen dem Substrat und der zweiten Schicht könnte noch zumindest eine weitere Schicht, wie z.B. Ölschichten, Schichten die durch den Arbeitsablauf bedingt auftreten, andere Trennmittelschichten auftreten.

Ein weiterer Gegenstand der Erfindung ist ein Verfahren zur Herstellung einer Schicht, die Bitumen-haltige Stoffe oder Stoffgemische oder Steinkohlenteerpech-haltige Stoffe oder Stoffgemische abweist, wobei eine erfindungsgemäße Zusammensetzung aufgebracht wird.

Ein Vorteil der erfindungsgemäßen Zusammensetzung ist, daß sie als Asphalt-Trennmittel auf Basis von Organopolysiloxanen in Form ihrer wässerigen Lösungen verwendet werden können.

Die erfindungsgemäßen Zusammensetzungen als Asphalt-Trennmittel sind umweltverträglich, sie enthalten vorzugsweise keinerlei organische Lösemittel, wie z.B. aliphatische oder aromatische Kohlenwasserstoffe, sie können einfach appliziert werden, sie sind auch in hoher Verdünnung stabil, sie weisen hervorragende (Mehrfach-) Trenneigenschaften gegenüber heißen Bitumina, bitumenhaltigen Bindemitteln, Asphalten, Bitumenbahnen, Steinkohlenteerpechen, Steinkohlenteer-Spezialpechen und Zubereitungen aus Steinkohlenteer-Spezialpechen und besonders gegenüber den oben beschriebenen, neuartigen Asphalten auf und sie rufen keine farbliche Veränderung der Asphalt-Zusammensetzungen und besonders kolorierter Bindemittel und Asphalte hervor.

Die erfindungsgemäßen Zusammensetzungen als Asphalttrennmittel, sind insbesondere besonders effektiv als Trennmedium gegen heiße Bitumina, bitumenhaltige Bindemitteln, Asphalte, Bitumenbahnen, Steinkohlenteerpeche, Steinkohlenteer-Spezialpeche und Zubereitungen aus Steinkohlenteer-Spezialpechen wirksam, wie zum Beispiel Destillationsbitumen, Hochvakuumbitumen, Oxidationsbitumen, Hartbitumen, Fällungsbitumen, Straßenbaubitumen, Industriebitumen, Bitumenlösung, Fluxbitumen, Kaltbitumen, Bitumenanstrichstoff, Bitumenemulsion, Bitumenhaftkleber, polymermodifiziertes Bitumen, gewöhnlicher, polymermodifizierter oder kolorierter Naturasphalt, Asphaltit und Asphaltgestein, gewöhnlicher, polymermodifizierter oder kolorierter technischer Asphalt, Straßenpech, Kaltpechlösung, alterungsbeständiges Straßenpech, Pechbitumen, Bitumenpech, Steinkohlenteer-Bindepech, Steinkohlenteer-Imprägnierpech, präpariertes Pech, hochviskoses Straßenpech, Pechemulsion, polymermodifiziertes Steinkohlenteer-Spezialpech, Pechsuspension und Steinkohlenteer-Spezialpech mit Mineralstoffen. Der Einfachheit halber und aufgrund der nicht immer einheitlichen Definitionen und Namensgebungen für die oben beschriebenen bituminösen Materialien und Peche, die oft regionenspezifisch verwendet werden, wird für die oben beschriebenen bituminösen Materialien und Peche der Begriff "Asphalt-Zusammensetzungen" verwendet. Für die Bundesrepublik Deutschland sind Definitionen, Beschreibungen, Anforderungen und stoffliche Charakteristika für Bitumina und Steinkohlenteerpeche in der DIN 55946 Teil 1 und Teil 2 sowie in der DIN 1995 Teil 1 bis Teil 5 dargestellt.

In den Beispielen 1a bis 1 c und 2a bis 2n wurde folgende Testmethode (TM 1) angewendet, um die Trennleistung der untersuchten Trennmittel zu bestimmen:
TM 1: Auf ein 10 x 10 cm großes Stahlblech wurde jeweils eine definierte Menge an Trennmittel gleichmäßig aufgetragen. Anschließend wurden 3,9 g eines bei 180 °C verflüssigten Asphalt-Bindemittels in einen Stahl-Hohlzylinder der Höhe 15 mm und dem Durchmesser 25 mm, der vorher auf das behandelte Stahlblech aufgesetzt worden war, gegossen. Nach Abkühlung des Asphalt-Bindemittels auf 30 °C wurde die Trennkraft zur Ablösung des mit Asphalt gefüllten Hohlzylinders vom Stahlblech mit einer am Hohlzylinder befestigten Federwaage bestimmt, wobei die Federwaage in paralleler Richtung zum Stahlblech mit einer konstanten Geschwindigkeit von 1 cm/s bewegt wurde. Die Trennkraft wird in g/cm² angegeben.
   In den Beispielen 3a und 3b wurde folgende Testmethode (TM 2) angewendet, um die Trennleistung und mögliche, negative Auswirkungen hinsichtlich Verfärbung auf den kolorierten Asphalt-Binder der untersuchten Trennmittel zu bestimmen:
TM 2: Auf ein 10 x 10 cm großes Stahlblech wurde jeweils eine definierte Menge an Trennmittel gleichmäßig aufgetragen. Anschließend wurden 3,9 g eines bei 180 °C verflüssigten Asphalt-Bindemittels in einen Stahl-Hohlzylinder der Höhe 15 mm und dem Durchmesser 25 mm, der vorher auf das behandelte Stahlblech aufgesetzt worden war, gegossen. Der Asphalt-Binder wurde dann 30 Minuten bei einer Temperatur von 180 °C belassen. Nach Abkühlung des Asphalt-Bindemittels auf 30 °C wurde die Trennkraft zur Ablösung des mit Asphalt gefüllten Hohlzylinders vom Stahlblech mit einer am Hohlzylinder befestigten Federwaage bestimmt, wobei die Federwaage in paralleler Richtung zum Stahlblech mit einer konstanten Geschwindigkeit von 1 cm/s bewegt wurde. Die Trennkraft wird in g/cm² angegeben.

In den Beispielen 1a bis 1c, 2a bis 2n, 3a, 3b und 4a bis 4d wurden folgende, hochviskose, polymermodifizierte Asphalt-Bindemittel eingesetzt, um die Eignung der erfindungsgemäßen Asphalttrennmittel auch unter verschärften Bedingungen zu beweisen:
Asphalt-Bindemittel AB 1: Schwarzer, polymermodifizierter Asphalt-Binder der Marke Senaphalt von Nisshin Kasei, Tokyo, Japan, mit folgenden Kenngrößen: Nadelpenetration bei 25 °C ca. 43 1/10 mm; Erweichungstemperatur ca. 87 °C; kinematische Viskosität bei 140 °C ca. 2290 mm²/s; kinematische Viskosität bei 180 °C ca. 321 mm²/s; Dieses Asphalt-Bindemittel wird für hochwertige wasserpermeable Asphalte eingesetzt.
Asphalt-Bindemittel AB 2: Kolorierter, polymermodifizierter Asphalt-Binder der Marke Shule Colors von Nisshin Kasei, Tokyo, Japan, mit folgenden Kenngrößen: Nadelpenetration bei 25 °C ca. 43 1/10 mm; Erweichurtgstemperatur ca. 88 °C; kinematische Viskosität bei 140 °C ca. 2530 mm²/s; kinematische Viskosität bei 180 °C ca. 570 mm²/s; Dieses Asphalt-Bindemittel wird für hochwertige kolorierte wasserpermeable Asphalte eingesetzt.

### Beispiele:

Allgemeine Formel

(CH₃)₃SiO-[Si(CH₃)₂O]ₓ-[Si(CH₃)(R)O]_{y}-Si(CH₃)₃

R bedeutet in
Formel A Viskosität 200 mm²7s 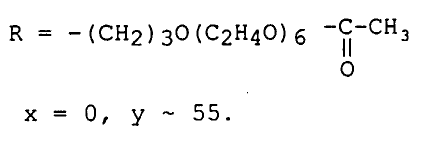
Formel B Viskosität 800 mm²/s

   = -(CH₂)₃O(C₂H₄O)₂₅(C₃H₆O)₂₅-H, x:y = 15:1, x+y ∼ 75

### Verbindung C:

R = -(CH₂)₃O(C₂H₄O)₆-CH₃, x = 0, y = 1.

Formel D Glucosid

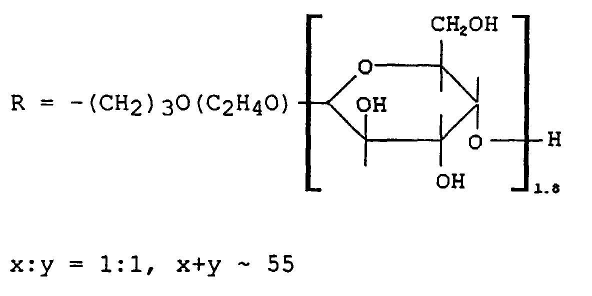

### Beispiel 1a:

Die Trennkraft eines wasserlöslichen Polyether-funktionellen Organopolysiloxans der Formel B (Viskosität 800 mm²/s), gegen AB 1 wurde gemäß TM 1 untersucht. Es wurden 2 g des wasserlöslichen Polyether-funktionellen Organopolysiloxans eingesetzt.

### Beispiel 1b:

Die Trennkraft eines Asphalttrennmittels, das 20 Gew.-% eines wasserlöslichen Polyether-funktionellen Organopolysiloxans der Formel B der Viskosität 800 mm²/s und 80 Gew.-% Wasser enthielt, gegen AB 1 wurde gemäß TM 1 untersucht. Es wurden 2 g des Asphalttrennmittels eingesetzt.

### Beispiel 1c:

Die Trennkraft eines Diesel-Kraftstoffs von Idemitsu, Japan, wurde gegen AB 1 gemäß TM 1 untersucht. Es wurden 2 g des Diesel-Kraftstoffs eingesetzt.

Die Ergebnisse der Beispiele 1a bis 1c sind in folgender Tabelle aufgeführt:

| | Beispiel 1a | Beispiel 1b | Beispiel 1c |
|---|---|---|---|
| Trennkraft [g/cm²] | 81 - 92 | 367 - 407 | keine Trennung |

Die erfindungsgemäßen Asphalttrennmittel zeigen auch in Verdünnung eine hervorragende Trennwirkung gegenüber hochviskosem polymermodifiziertem Asphalt-Binder, der für wasserpermeable Asphalte verwendet werden kann. Diesel-Kraftstoffe sind als Trennmittel für diese Asphalt-Binder nicht geeignet.

### Beispiel 2a:

Die Trennkraft eines wasserlöslichen Polyether-funktionellen Organopolysiloxans der Formel B der Viskosität 800 mm²/s gegen AB 2 wurde gemäß TM 1 untersucht. Es wurden 0,5 g des wasserlöslichen Polyether-funktionellen Organopolysiloxans eingesetzt.

### Beispiel 2b:

Die Trennkraft eines wasserlöslichen Polyether-funktionellen Organopolysiloxans der Formel B der Viskosität 800 mm²/s gegen AB 2 wurde gemäß TM 1 untersucht. Es wurde 1 g des wasserlöslichen Polyether-funktionellen Organopolysiloxans eingesetzt.

### Beispiel 2c:

Die Trennkraft eines Asphalttrennmittels, das 50 Gew.-% eines wasserlöslichen Polyether-funktionellen Organopolysiloxans der Formel B der Viskosität 800 mm²/s und 50 Gew.-% Wasser enthielt, gegen AB 2 wurde gemäß TM 1 untersucht. Es wurden 0,5 g des Asphalttrennmittels eingesetzt.

### Beispiel 2d:

Die Trennkraft eines Asphalttrennmittels, das 50 Gew.-% eines wasserlöslichen Polyether-funktionellen Organopolysiloxans der Formel B der Viskosität 800 mm²/s und 50 Gew.-% Wasser enthielt, gegen AB 2 wurde gemäß TM 1 untersucht. Es wurde 1 g des Asphalttrennmittels eingesetzt.

### Beispiel 2e:

Die Trennkraft eines Asphalttrennmittels, das 20 Gew.-% eines wasserlöslichen Polyether-funktionellen Organopolysiloxans der Formel B der Viskosität 800 mm²/s und 80 Gew.-% Wasser enthielt, gegen AB 2 wurde gemäß TM 1 untersucht. Es wurden 0,5 g des Asphalttrennmittels eingesetzt.

### Beispiel 2f:

Die Trennkraft eines Asphalttrennmittels, das 20 Gew.-% eines wasserlöslichen Polyether-funktionellen Organopolysiloxans der Formel B der Viskosität 800 mm²/s und 80 Gew.-% Wasser enthielt, gegen AB 2 wurde gemäß TM 1 untersucht. Es wurde 1 g des Asphalttrennmittels eingesetzt.

### Beispiel 2g:

Die Trennkraft eines wasserlöslichen Polyether-funktionellen Organopolysiloxans der Formel A der Viskosität 200 mm²/s gegen AB 2 wurde gemäß TM 1 untersucht. Es wurden 0,5 g des wasserlöslichen Polyether-funktionellen Organopolysiloxans eingesetzt.

### Beispiel 2h:

Die Trennkraft eines Asphalttrennmittels, däs 20 Gew.-% eines wasserlöslichen Polyether-funktionellen Organopolysiloxans der Formel A der Viskosität 200 mm²/s und 80 Gew.-% Wasser enthielt, gegen AB 2 wurde gemäß TM 1 untersucht. Es wurden 0,5 g des Asphalttrennmittels eingesetzt.

### Beispiel 2i:

Die Trennkraft eines Asphalttrennmittels, das 50 Gew.-% eines bei Raumtemperatur festen, wasserlöslichen Polyglucosid-funktionellen Organopolysiloxans der Formel D, das als Glucosideinheit Glukoseeinheiten enthält und 50 Gew.-% Wasser enthielt, gegen AB 2 wurde gemäß TM 1 untersucht. Es wurden 0,5 g des Asphalttrennmittels eingesetzt.

### Beispiel 2j:

Die Trennkraft eines Asphalttrennmittels, das 10 Gew.-% eines bei Raumtemperatur festen, wasserlöslichen Polyglucosid-funktionellen Organopolysiloxans der Formel D und 90 Gew.-% Wasser enthielt, gegen AB 2 wurde gemäß TM 1 untersucht. Es wurden 0,5 g des Asphalttrennmittels eingesetzt.

### Beispiel 2k:

Die Trennkraft eines wasserdispergierbaren Polyether-funktionellen Organopolysiloxans der Formel C der Viskosität 20 mm²/s gegen AB 2 wurde gemäß TM 1 untersucht. Es wurden 0,5 g des wasserdispergierbaren Polyether-funktionellen Organopolysiloxans eingesetzt.

### Beispiel 21:

Die Trennkraft eines Asphalttrennmittels, das 20 Gew.-% eines wasserdispergierbaren Polyether-funktionellen Organopolysiloxans der Formel C der Viskosität 20 mm²/s und 80 Gew.-% Wasser enthielt, gegen AB 2 wurde gemäß TM 1 untersucht. Es wurden 0,5 g des Asphalttrennmittels eingesetzt.

### Beispiel 2m:

Die Trennkraft eines Diesel-Kraftstoffs von Idemitsu, Japan, wurde gegen AB 2 gemäß TM 1 untersucht. Es wurden 0,5 g des Diesel-Kraftstoffs eingesetzt.

### Beispiel 2n:

Die Trennkraft eines Diesel-Kraftstoffs von Idemitsu, Japan, wurde gegen AB 2 gemäß TM 1 untersucht. Es wurde 1 g des Diesel-Kraftstoffs eingesetzt.

Die Ergebnisse der Beispiele 2a bis 2n sind in folgender Tabelle aufgeführt:

| | 2a | 2b | 2c | 2d | 2e | 2f | 2g |
|---|---|---|---|---|---|---|---|
| Trennkraft [g/cm²] | 367-407 | 143-204 | 285-367 | 367-509 | 509-611 | 163-305 | 509 |

| | 2h | 2i | 2j | 2k | 2l | 2m | 2n |
|---|---|---|---|---|---|---|---|
| Trennkraft [g/cm²] | 293 | 118 | 161 | 310 | 141 | Keine Trennung | keine Trennung |

Sowohl wasserlösliche als auch wasserdispergierbare Polyetherfunktionelle Organopolysiloxane und wasserlösliche Polyglucosid-funktionelle Organopolysiloxane zeigen sowohl in niedriger Konzentration als auch in Verdünnung eine hervorragende Trennwirkung gegenüber hochviskosem polymermodifiziertem koloriertem Asphalt-Binder, der für wasserpermeable kolorierte Asphalte verwendet werden kann. Diesel-Kraftstoffe sind als Trennmittel für diese Asphalt-Binder nicht geeignet.

### Beispiel 3a:

Die Trennkraft eines wasserlöslichen Polyether-funktionellen Organopolysiloxans der Formel B der Viskosität 800 mm²/s gegen AB 2 wurde gemäß TM 2 untersucht. Es wurden 0,5 g des wasserlöslichen Polyether-funktionellen Organopolysiloxans eingesetzt. Zusätzlich wurde begutachtet, ob das wasserlösliche Polyether-funktionelle Organopolysiloxan unter den gegebenen Testbedingungen eine Verfärbung des kolorierten Asphalt-Binders hervorruft.

### Beispiel 3b:

Die Trennkraft eines Diesel-Kraftstoffs von Idemitsu, Japan, wurde gegen AB 2 gemäß TM 2 untersucht. Es wurden 0,5 g des Diesel-Kraftstoffs eingesetzt.

Die Ergebnisse der Beispiele 3a und 3b sind in folgender Tabelle aufgeführt:

| | Beispiel 3a | Beispiel 3b |
|---|---|---|
| Trennkraft [g/cm²] | 876-937 | Keine Trennung |
| Verfärbung von AB 2 | Keine | |

Die erfindungsgemäßen Asphalttrennmittel zeigen auch bei hoher Temperaturbelastung eine hervorragende Trennwirkung gegenüber hochviskosem polymermodifiziertern koloriertem Asphalt-Binder, der für wasserpermeable kolorierte Asphalte verwendet werden kann. Diesel-Kraftstoffe sind unter diesen Bedingungen als Trennmittel für diese Asphalt-Binder nicht geeignet. Die erfindungsgemäßen Asphalttrennmittel rufen keinerlei Verfärbung von hochviskosem polymermodifiziertem koloriertern Asphalt-Binder hervor.

### Beispiel 4a:

AB 1 wurde bei 170 °C aufgeschmolzen und sofort mit der doppelten Menge eines Asphalttrennmittels, das 10 Gew.-% eines wasserlöslichen Polyether-funktionellen Organopolysiloxans der Formel B der Viskosität 800 mm²/s und 90 Gew.-% Wasser enthielt, übergossen. Das Gemisch wurde anschließend auf Raumtemperatur abgekühlt. Nach einer Woche Standzeit war die überstehende, flüssige Phase farblos. Das Asphalttrennmittel löste den Asphalt Binder nicht auf.

### Beispiel 4b:

AB 1 wurde bei 170 °C aufgeschmolzen und sofort mit der doppelten Menge eines Asphalttrennmittels, das 5 Gew.-% eines bei Raumtemperatur festen wasserlöslichen Polyglucosid-funktionellen Organopolysiloxans der Formel D, das als Glucosideinheit Glukoseeinheiten enthält und 95 Gew.-% Wasser enthielt, übergossen. Das Gemisch wurde anschließend auf Raumtemperatur abgekühlt. Nach einer Woche Standzeit war die überstehende, flüssige Phase farblos. Das Asphalttrennmittel löste den Asphalt Binder nicht auf.

### Beispiel 4c:

AB 2 wurde bei 170 °C aufgeschmolzen und sofort mit der doppelten Menge eines Asphalttrennmittels, das 10 Gew.-% eines wasserlöslichen Polyether-funktionellen Organopolysiloxans der Formel B der Viskosität 800 mm²/s und 90 Gew.-% Wasser enthielt, übergossen. Das Gemisch wurde anschließend auf Raumtemperatur abgekühlt. Nach einer Woche Standzeit war die überstehende, flüssige Phase farblos. Das Asphalttrennmittel löste den Asphalt Binder nicht auf.

### Beispiel 4d:

AB 2 wurde bei 170 °C aufgeschmolzen und sofort mit der doppelten Menge eines Asphalttrennmittels, das 5 Gew.-% eines bei Raumtemperatur festen wasserlöslichen Polyglucosid-funktionellen Organopolysiloxans der Formel D, das als Glucosideinheit Glukoseeinheiten enthält und 95 Gew.-% Wasser enthielt, übergossen. Das Gemisch wurde anschließend auf Raumtemperatur abgekühlt. Nach einer Woche Standzeit war die überstehende, flüssige Phase farblos. Das Asphalttrennmittel löste den Asphalt Binder nicht auf.

### Beispiel 5:

Am 27.02.1999 wurde ein Asphalttrennmittel, das 20 Gew.-% eines wasserlöslichen Polyether-funktionellen Organopolysiloxans der Formel B der Viskosität 800 mm²/s und 80 Gew.-% Wasser enthielt, einem Feldtest unterzogen. 5 Liter des Asphalttrennmittels wurden mit einem konventionellem Handsprühgerät auf die Plattform eines Lastwagens gleichmäßig aufgebracht, welche anschließend mit hochviskosem polymermodifiziertem koloriertem Asphalt, der eine Temperatur von 175 °C hatte, beladen wurde. Nach dem Transport und der Entladung des Asphalts, welche etwa 1 Stünde in Anspruch nahmen, wurde die Ladefläche des Lastwagens begutachtet. Es konnte keinerlei zurückbleibender Asphalt auf der Ladefläche beobachtet werden. Zusätzlich wurde der Asphalt begutachtet. Am Asphalt konnte keinerlei Verfärbung festgestellt werden. Die Umgebungstemperatur bei dem Feldversuch betrug ca. 3 °C.

## Patentansprüche

1. Zusammensetzung, die zumindest ein Polyorganosiloxan in Wasser gelöst oder dispergiert enthält, ohne daß zusätzliche Dispergiermittel enthalten sind.

2. Zusammensetzung nach Anspruch 1, dadurch gekennzeichnet, daß es sich bei dem Polyorganosiloxan um ein Polyethersiloxan handelt.

3. Zusammensetzung nach Anspruch 1, dadurch gekennzeichnet, daß es sich bei dem Polyorganosiloxan um ein Polyglykosidsiloxan handelt.

4. Zusammensetzung nach einem der Ansprüche 1 bis 3, daß zumindest das Polyorganosiloxan oder daß zumindest das Polyethersiloxan oder daß zumindest das Polyglykosidsiloxan in Wasser in einem Verhältnis von 1:0,001 bis 1:100000 enthalten ist.

5. Schichtsystem aus zumindest drei Schichten, wobei die erste Schicht ein Substrat ist und die zweite Schicht eine Zusammensetzung nach einem der Ansprüche 1 bis 4 enthält und die dritte Schicht zumindest einen Bitumen-haltigen Stoff oder Stoffgemisch oder einen Steinkohlenteerpech-haltigen Stoff oder Stoffgemisch enthält.

6. Schichtsystem nach Anspruch 5, mit der Maßgabe, daß die dritte Schicht unmittelbar auf die zweite Schicht folgt.

7. Verfahren zur Herstellung einer Schicht, die Bitumen-haltige Stoffe oder Stoffgemische oder Steinkohlenteerpech-haltige Stoffe oder Stoffgemische abweist, dadurch gekennzeichnet, daß eine Zusammensetzung nach einem der Ansprüche 1 bis 4 auf ein Substrat aufgebracht wird.
